# FASCICULE DE BREVET EUROPEEN

(11) **EP 4 014 153 B1**
(45) Date de publication et mention de la délivrance du brevet: **08.01.2025**
(21) Numéro de dépôt: 20775911.9
(22) Date de dépôt: 12.08.2020
(51) Int. Cl.: G06K 7/10

(54) **DISPOSITIF POUR LA FABRICATION D'UN PRODUIT PERSONNALISÉ**
VORRICHTUNG ZUR HERSTELLUNG EINES PERSONALISIERTEN PRODUKTS
DEVICE FOR MANUFACTURING A PERSONALISED PRODUCT

(30) Priorité: 12.08.2019 FR 1909144
(43) Date de publication de la demande: 22.06.2022
(73) Titulaire: L'OREAL, 75008 Paris (FR)
(72) Inventeur: LELOUP, David, 10000 TROYES (FR); GYEJACQUOT, Rémi, 10120 SAINT POUANGE (FR); BENOIT, Christophe, 77144 MONTEVRAIN (FR); DEMBEGA, Jean Camille Isidore, 10000 TROYES (FR)
(74) Mandataire: Yes My Patent
(86) Numéro de dépôt international: PCT/FR2020/000220
(87) Numéro de publication internationale: WO 2021/028627

(56) Documents cités:
- EP-A1- 3 240 626
- EP-A2- 2 372 369
- EP-B1- 3 240 626
- WO-A1-2017/118803
- WO-A1-2018/064012
- US-A1- 2018 093 814

## Description

La présente invention concerne un dispositif pour la fabrication d'un produit cosmétique personnalisé (1), par mélange d'au moins deux composants logés dans un contenant respectif, au moins un des contenants étant un pot (2), lesdits contenants étant munis chacun d'au moins un code d'identification (3), ledit dispositif pour la fabrication d'un produit personnalisé (1) comprenant au moins un moyen de lecture dudit code d'identification (3) du pot, et comprenant un dispositif de mélange, au moins un autre contenant étant une capsule (4), le code d'identification (3) de la capsule et du pot étant de nature identique ou différente, ledit dispositif comprenant au moins un moyen de lecture dudit code d'identification (3) de la capsule, et lesdits moyens de lecture pouvant être un seul moyen de lecture dans le cas où le code d'identification (3) de la capsule et du pot sont de nature identique, ledit dispositif comprenant au moins un moyen d'écriture et ré-écriture de codes d'identification (3) de la capsule et/ou du pot, lesdits codes d'identification (3) stockant des informations sur le contenant et le composant, lesdites informations comprenant la date d'ouverture du contenant et la péremption du composant suite à cette ouverture. La présente invention concerne également l'utilisation du dispositif selon l'invention pour la préparation d'un produit cosmétique personnalisé et une méthode de contrôle et de suivi des contenants et de leur contenu pour la fabrication d'un produit cosmétique personnalisé.

Le domaine de l'invention concerne en particulier l'identification et la traçabilité de contenants dans un dispositif pour la fabrication d'un produit personnalisé (1).

Il est connu de FR1203150 un dispositif pour la fabrication d'un produit personnalisé par mélange d'au moins deux composants logés dans un contenant respectif, utilisant des capsules comportant un code d'identification couplé à des moyens de lecture dudit code d'identification, ledit code d'identification prenant la forme d'un code couleur couplé à un moyen de lecture optique, afin d'identifier le composant contenu dans un contenant.

Le document WO2018/064012 décrit un mélangeur pour mélanger une substance dans un récipient. Le mélangeur comprend un moteur, un cadre configuré pour être commandé par le moteur pour tourner sur un axe, un support disposé au niveau d'une première extrémité du cadre et configuré pour maintenir le récipient, un contrepoids disposé au niveau d'une seconde extrémité du cadre opposée au support, la position du contrepoids par rapport à l'axe étant réglable. Le mélangeur peut être une unité autonome, ou il peut être disposé dans un appareil pour distribuer une composition cosmétique. Ce dispositif n'emploie pas de capsule, et n'utilise pas d'informations liées à la date d'ouverture du contenant et la péremption du composant suite à cette ouverture.

Le document WO2017/118803 divulgue un dispositif avec interface pour la fabrication d'un produit cosmétique personnalisé, par mélange d'au moins deux composants logés dans un contenant respectif, au moins un des contenants étant une capsule, et au moins un autre contenant étant un pot, au moins un desdits contenant comportant un code d'identification, ledit dispositif comprenant une interface de collecte de données personnalisées, par exemple sur un téléphone mobile ou une tablette. Ce dispositif ne comprend pas de moyen d'écriture et ré-écriture de codes d'identification de la capsule et/ou du pot, et n'utilise pas d'informations liées à la date d'ouverture du contenant et la péremption du composant suite à cette ouverture.

Le document EP3240626 concerne un dispositif servant à mélanger des liquides, comprenant un corps principal comprenant un logement conçu pour recevoir un contenant, un support porté par le corps principal et ayant une pluralité d'encoches, le support étant conçu pour recevoir une pluralité de cartouches, chaque encoche étant conçue pour recevoir une cartouche, un second actionneur conçu pour agir sur une cartouche placée dans l'encoche située en correspondance avec le logement, et une unité de commande reliée aux premier et second actionneurs, conçue pour recevoir un ensemble de données indiquant une séquence d'un ou plusieurs liquides et, pour chacun parmi un ou plusieurs liquides, une quantité de liquide associée. Ce document ne décrit pas a minima l'utilisation d'informations liées à la date d'ouverture du contenant et la péremption du composant suite à cette ouverture.

Cependant, plusieurs problèmes se posent. En effet, en utilisant la solution telle qu'exposée dans l'art antérieur, il est impossible d'assurer la provenance des contenants, et le risque de production et d'utilisation de contenants et de composants contrefaits est important, et entraîne un risque sanitaire pour les utilisateurs dudit dispositif qui ne se fourniraient pas chez un revendeur agrée. De plus, les composants contenus dans les contenants pouvant être des composants périssables, il est indispensable qu'un suivi de la date d'ouverture du contenant soit effectué. Enfin, dans le cas d'utilisation de ces dispositifs dans des établissements pouvant en comprendre plusieurs, tel que des hôtels, il est indispensable que les contenants soient interchangeables entre les machines, et qu'elles puissent individuellement identifier le contenu des contenants en termes de nature, de péremption et de quantité restante.

Ainsi, il existe aujourd'hui un besoin d'une meilleure traçabilité des contenants utilisés par les dispositifs pour la fabrication d'un produit personnalisé, ainsi qu'un besoin de suivi accru des composants contenus dans ces contenants.

Aujourd'hui, la Demanderesse innove en proposant un dispositif et des contenants résolvant les problèmes référencés ci-dessus grâce à des moyens de traçabilité des contenants et des composants.

En effet, la Demanderesse a mis au point un dispositif pour la fabrication d'un produit personnalisé (1), comprenant des moyens de lecture, d'écriture et de ré-écriture de codes d'identifications (3), qui sont couplés à au moins deux contenants comprenant chacun au moins un code d'identification (3).

Ainsi, l'invention concerne selon un premier aspect un dispositif pour la fabrication d'un produit cosmétique personnalisé (1), par mélange d'au moins deux composants logés dans un contenant respectif, au moins un des contenants étant un pot (2), lesdits contenants étant munis chacun d'au moins un code d'identification (3), ledit dispositif pour la fabrication d'un produit personnalisé (1) comprenant au moins un moyen de lecture dudit code d'identification (3) du pot, et comprenant un dispositif de mélange, au moins un autre contenant étant une capsule (4), le code d'identification (3) de la capsule et du pot étant de nature identique ou différente, ledit dispositif comprenant au moins un moyen de lecture dudit code d'identification (3) de la capsule, et lesdits moyens de lecture pouvant être un seul moyen de lecture dans le cas où le code d'identification (3) de la capsule et du pot sont de nature identique, ledit dispositif comprenant au moins un moyen d'écriture et ré-écriture de codes d'identification (3) de la capsule et/ou du pot, lesdits codes d'identification (3) stockant des informations sur le contenant et le composant, lesdites informations comprenant la date d'ouverture du contenant et la péremption du composant suite à cette ouverture.

Par contenant est entendu un moyen de stockage d'un composant, de préférence cosmétique. Des exemples de contenants sont notamment des pots ou des capsules.

Par embout pompe est entendu selon l'invention un embout qui permet, lorsqu'il est enclenché dans l'orifice d'un mélangeur de délivrer une dose de composant contenu dans ledit pot (2).

Par capsule est entendu selon l'invention un contenant permettant un pré-dosage des composants, de préférence cosmétiques, en particulier des composants actifs, sans manipulation de l'utilisateur, une combinaison aisée des composants, de préférence cosmétiques, puisqu'il suffit d'ajouter autant de capsules que l'on souhaite combiner de composant, de préférence cosmétique, en particulier de composant actifs, dans son produit de préférence cosmétique, personnalisé, et une conservation optimale du produit, de préférence cosmétique, personnalisé, le mélange était réalisé extemporanément, de préférence au moment de l'utilisation.

En effet les composants, de préférence cosmétiques, contenus dans les capsules (4), en particulier les composants actifs, sont protégés notamment d'une éventuelle contamination bactérienne, oxydation ou dégradation par les UV.

Par codes d'identification (3) est entendu selon l'invention des éléments permettant de stocker des informations pouvant être lues à l'aide de moyens de lecture ou à l'œil nu. Dans le cadre de l'invention, ces codes portent des informations sur les contenants et les composants qu'ils contiennent, et permettent d'indiquer celles-ci à un utilisateur ou un dispositif. Les codes utilisés dans le cadre de la présente invention peuvent être tout code d'identification (3) connu des connaissances générales de l'homme du métier.

De manière préférée selon l'invention, lesdits codes d'identifications (3) sont choisis parmi des codes couleurs, des puces RFID, des codes barre, des QR code, des codes Datamatrix, les codes PDF-417, des MaxiCode, des étiquettes NFC, des formes mécaniques.

Par codes couleurs est entendu selon l'invention l'utilisation de couleurs ou de combinaisons de couleurs pour caractériser des informations.

Par puces RFID est entendu selon l'invention des « radio-étiquettes » de radio-identification, ou « tag » permettant de mémoriser et récupérer des données à distance.

Par antenne RFID est entendu selon l'invention une antenne capable de lire les puces RFID. Cette antenne est également capable d'écrire et de réécrire sur les puces RFID.

Par codes barre est entendu selon l'invention la représentation d'une donnée numérique ou alphanumérique sous forme d'un symbole constitué de barres et d'espaces dont l'épaisseur varie en fonction de la symbologie utilisée et des données ainsi codées, destinés à une lecture automatisée par un capteur électronique,

Par QR code est entendu selon l'invention un type de code-barres en deux dimensions constituées de modules noirs disposés dans un carré à fond blanc, dont l'agencement définit l'information que contient le code.

Par codes Datamatrix est entendu selon l'invention un type de code-barres bidimensionnelle permettant de représenter sur une surface réduite, jusqu'à 2335 caractères alphanumériques ou 3116 caractères numériques, sur environ 1 cm.

Par codes PDF-417 est entendu selon l'invention le format de code-barres à 2 dimensions ayant une capacité de stockage de 2710 caractères.

Par Maxicode est entendu selon l'invention un code-barre bidimensionnelle qui permet la représentation de 93 caractères alpha-numériques sur 6,45 cm².

Par étiquettes NFC est entendu selon l'invention une étiquette comprenant une antenne et une puce passive utilisant la technologie de communication en champ proche (Near Field Communication).

Par formes mécanique est entendu selon l'invention la forme du contenant en lui-même ou d'un de ses éléments, formant par exemple un détrompeur, et/ou la représentation sur le contenant de formes, par exemple des points, des carrés, des rectangles, des triangles, en reliefs ou non, organisées de manière à véhiculer une information à l'utilisateur ou au dispositif selon l'invention.

De manière préférée selon l'invention, le moyen de lecture du code d'identification (3) de la capsule et/ou du pot, et le moyen d'écriture et ré-écriture du code d'identification (3) de la capsule et/ou du pot sont un même dispositif.

De manière préférée selon l'invention, au moins un desdits codes d'identification (3) de la capsule et/ou du pot consiste en une puce RFID, et le moyen de lecture, d'écriture et ré-écriture de ladite puce RFID est une antenne RFID (5).

De manière préférée selon l'invention, le code d'identification (3) de la capsule est un QR code, le code d'identification (3) du pot est un puce RFID, et le moyen de lecture, d'écriture et ré-écriture de ladite puce RFID est une antenne RFID (5).

Par moyens de lecture est entendu selon l'invention tout moyen permettant de détecter la présence d'un code d'identification (3) et/ou tout moyen capable de lire les informations potentiellement contenues dans les codes d'identifications (3). Un exemple de moyen de lecture est une antenne RFID ou un lecteur de QR code.

Les moyens de lecture du ou desdits code d'identification (3) sont adaptés aux codes d'identification (3) choisis.

En outre selon l'invention, lesdits codes d'identification (3) stockent des informations sur le contenant et le composant, lesdites informations comprenant en outre la nature du composant et/ou la provenance du contenant et/ou la quantité restante du composant dans le contenant et/ou le nombre de dose restante du composant et/ou le numéro de lot et/ou le numéro de série et/ou des paramètres permettant au dispositif de se configurer.

Par « nature du composant » est entendu selon l'invention la composition du composant dans le contenant.

Par « date de péremption » est entendu selon l'invention la date à laquelle ledit composant ne doit plus être utilisé pour fabriquer un produit personnalisé car sa fraicheur n'est plus assurée.

Par « provenance du contenant » est entendu selon l'invention si le contenant a bien été confectionné de manière officielle, à savoir par un fabriquant agréé, et non par exemple un éventuel contrefacteur.

Par « date d'ouverture du contenant » est entendu selon l'invention la date à laquelle le contenant a été ouvert et/ou utilisé pour la première fois.

Par « nombre de dose restante » est entendu selon l'invention le nombre de fois restante où le contenant pourra être prélevé pour satisfaire la production d'un produit personnalisé selon l'invention.

Par « numéro de lot » est entendu selon l'invention le numéro de lot des contenants et donc des composants, de préférence cosmétiques, permettant ainsi de retrouver, par exemple en cas de problème, tous les produits d'un même lot.

Par « numéro de série » est entendu selon l'invention le numéro de série des contenants et donc des composants, de préférence cosmétiques, permettant ainsi de retrouver, par exemple en cas de problème sanitaire, tous les produits d'une même série.

Par « paramètres permettant au dispositif de se configurer » est entendu selon l'invention des paramètres propres au dispositif influencés par les informations comprises dans les codes d'identification (3), par exemple par les propriétés physico-chimiques des composants, par le fait que le composant soit périmé, ou qu'il ne reste pas une quantité assez importante de produit pour fournir un produit personnalisé.

De manière préférée, lesdits codes d'identification (3) stockent des paramètres permettant au dispositif de se configurer.

De manière préférée selon l'invention, l'antenne RFID est configurée pour réécrire sur la puce RFID la date d'ouverture du contenant et/ou la quantité restante du composant dans le contenant et/ou le nombre de dose restante du composant ;

Par « réécrire sur la puce RFID » est entendu selon l'invention qu'après chaque utilisation et prélèvement du composant dans le contenant, l'antenne RFID du dispositif selon l'invention envoie des informations à la puce RFID dudit contenant, permettant lors d'une prochaine utilisation, dans le même dispositif selon l'invention ou dans un autre dispositif selon l'invention, que ledit dispositif identifie la date d'ouverture du contenant et son éventuelle péremption qui en découlerait et/ou le niveau de composant dans le contenant et/ou la possibilité de prélever assez de composition pour préparer le produit personnalisé, de préférence cosmétique, selon l'invention.

De manière préférée selon l'invention, ledit dispositif empêche le prélèvement du contenant si lors de la lecture des codes d'identification (3), la nature du composant n'est pas la bonne et/ou la date de péremption du composant est dépassée, et/ou la provenance du contenant n'est pas officielle et/ou la quantité restante du composant est insuffisante et/ou le nombre de dose est égal à 0 et/ou le numéro de lot et/ou de série est inconnu.

De manière préférée selon l'invention, ledit dispositif indique le motif pour lequel il empêche le prélèvement du contenant à l'utilisateur, via l'interface apte à afficher les informations sur le contenant et le composant, stockées dans les codes d'identification (3).

Lesdits au moins deux composants, de préférence cosmétiques, comprennent de manière encore préférée :
- au moins un composant de base, et
- au moins un, deux, trois, quatre, cinq ou au moins six composants actifs.

Par composants on entend désigner selon la présente invention des liquides de viscosité pouvant être de viscosité différente et pouvant aller de 1 centipoise ou 0,001 Pa.S (comme de l'eau par exemple) à 500 Pa.s (comme du beurre à 10°C, viscosité mesurée avec Brookfield DVIII Ultra, aiguille F, Vitesse 1.5), ainsi que des poudres. Préférentiellement on sélectionne au moins un composé sous forme liquide. Il peut par exemple s'agir de mélange de peinture liquide et de pigments en poudre, de mélange de précurseur de coloration capillaire, par exemple un oxydant, une base et un coupleur pour obtenir une composition de coloration capillaire, de mélange de deux fond de teint cosmétique de couleur différente pour obtenir un fond de teint de la couleur recherchée, de mélange d'une base de crème cosmétique et d'un ou plusieurs actif(s), ou encore de mélange d'un fond de sauce alimentaire et d'un arôme liquide, ou de mélange d'un alcool alimentaire, d'un jus de fruit et d'un sirop alimentaire ou liqueur pour la fabrication d'un cocktail.

De manière avantageuse selon l'invention les au moins deux composants sont au moins deux composants cosmétiques, de préférence au moins un composant de base et au moins un, deux, trois, quatre, cinq, ou au moins six composants actifs. De manière particulièrement préférée, les au moins deux composants sont au moins un composant de base et au moins un, deux, ou trois composant actif.

Par « composant de base », on entend un composant cosmétique dont le but est d'apporter une texture particulière (crème, sérum, huile, etc.) au produit cosmétique. Il peut s'agir d'un seul ingrédient (par exemple de l'huile d'amande douce) ou plusieurs ingrédients (par exemple de l'eau, de l'huile d'amande douce et un émulsionnant) pour obtenir ladite texture particulière.

Par « composant actif », on entend un composant cosmétique dont le but est d'apporter au moins une activité particulière (anti-âge, hydratant, antioxydant, etc.). Il peut s'agir d'un seul ou de plusieurs principes actifs combinés pour obtenir ladite activité particulière.

De manière préférée selon l'invention, ledit dispositif comprend un dispositif de mélange.

Par « dispositif de mélange » est entendu un dispositif permettant d'homogénéiser une association de plusieurs composants pour réaliser un produit, de préférence cosmétique.

De manière préférée selon l'invention, ledit dispositif selon l'invention comprend un dispositif de mélange tel que décrit dans les documents FR1203150, FR1600021, FR1600023, FR1600024, WO2017/118799, WO2017/118800, WO2017/118801, WO2017/118802, WO2017/118803, incorporés ici par référence.

De manière préférée selon l'invention, ledit dispositif comprend un dispositif de prélèvement des composants dans la capsule (4).

Par dispositif de prélèvement est entendu un dispositif permettant de retirer le contenu de la capsule (4) afin de délivrer, par exemple dans un dispositif de mélange.

De manière préférée selon l'invention, ledit dispositif comprend un dispositif de transfert des composants vers le dispositif de mélange.

De manière encore plus préférée selon l'invention, ledit dispositif de prélèvement comprend un dispositif de prélèvement des composants dans la capsule (4), et un dispositif de transfert des composants vers le dispositif de mélange, de préférence respectivement une aiguille creuse et un moyen d'aspiration.

De manière préférée selon l'invention, ledit dispositif selon l'invention comprend un dispositif de prélèvement tel que décrit dans les documents FR1203150, FR1600021, FR1600023, FR1600024, WO2017/118799, WO2017/118800, WO2017/118801, WO2017/118802, WO2017/118803, incorporés ici par référence.

De manière préférée selon l'invention, ledit dispositif comprend une interface de collecte des données personnalisées apte à interagir avec l'utilisateur pour permettre à l'utilisateur d'indiquer ses données personnalisées, de préférence choisies à partir d'une base de données prédéfinie.

Par interface de collecte de données on entend désigner selon la présente invention une interface, de préférence une interface informatique, qui permet à un utilisateur ou à un tiers de la part de l'utilisateur, de renseigner ses données personnalisées qui seront enregistrées et/ou transférées, par exemple à partir d'une base de données, à un dispositif de traitement des données.

De manière préférée selon l'invention, les données personnalisées comprennent l'âge de l'utilisateur, le sexe de l'utilisateur, le nombre d'heure de sport par jour ou par semaine de l'utilisateur, le nombre d'heure de sommeil par nuit de l'utilisateur, la température de l'environnement où évolue l'utilisateur, le taux d'hygrométrie de l'environnement où évolue l'utilisateur, le taux de pollution de l'environnement où évolue l'utilisateur, et/ou les caractéristiques de la peau de l'utilisateur.

Par caractéristiques de la peau de l'utilisateur, on entend notamment désigner selon la présente invention le type de peau de l'utilisateur (tel que peau sèche, peau grasse, peau mixte, ou peau normale), le phototype de la peau de l'utilisateur, la couleur de la peau, l'éclat du teint (tel que teint terne, ou teint lumineux), la sensibilité de la peau de l'utilisateur, la présence de rides et/ou ridules sur la peau de l'utilisateur, la présence de tâches sur la peau de l'utilisateur, l'éventuel manque de fermeté de la peau de l'utilisateur, et/ou la présence de cernes et/ou poches sur la zone du contour de l'œil.

De manière préférée, on entend l'âge de l'utilisateur, le sexe de l'utilisateur, le nombre d'heure de sport par jour ou par semaine de l'utilisateur, le nombre d'heure de sommeil par nuit de l'utilisateur, la température de l'environnement où évolue l'utilisateur, le taux d'hygrométrie de l'environnement où évolue l'utilisateur, le taux de pollution de l'environnement où évolue l'utilisateur, et/ou les caractéristiques de la peau de l'utilisateur.

De manière supplémentaire, les données personnalisées selon l'invention comprennent le bénéfice beauté souhaité dans le cas d'un produit cosmétique personnalisé (tel qu'action anti-âge, action antitache, hydratation de la peau).

De manière préférée selon l'invention, ledit dispositif selon l'invention comprend une interface de collecte de données telle que décrite dans les documents FR1203150, FR1600021, FR1600023, FR1600024, WO2017/118799, WO2017/118800, WO2017/118801, WO2017/118802, WO2017/118803, incorporés ici par référence.

De manière préférée selon l'invention, ledit dispositif comprend une interface apte à afficher les informations sur le contenant et le composant, stockées dans les codes d'identification (3), lesdites informations comprenant la nature du composant et/ou la date de péremption du composant et/ou la provenance du contenant et/ou la date d'ouverture du contenant et/ou la quantité restante du composant dans le contenant et/ou le nombre de dose restante du composant et/ou le numéro de lot et/ou le numéro de série et/ou les paramètres permettant au dispositif de se configurer.

De manière préférée selon l'invention, ladite interface de collecte des données personnalisées et ladite interface apte à afficher des informations sur le contenant et le composant sont incorporées dans une même interface.

Cette interface peut être composée par exemple d'un écran tactile, d'un affichage, d'un moniteur, d'un clavier d'un écran de visualisation, d'un lecteur de codes-barres, d'un crayon lumineux, d'un système de reconnaissance vocale, d'un clavier, d'une souris ou similaire ou d'autres équipements périphériques.

De manière avantageuse selon l'invention, l'interface peut être connectée à un réseau informatique, pouvant prendre par exemple la forme d'un serveur informatique, physiquement connecté à l'interface ou connecté via Internet (également appelé serveur dématérialisé ou serveur dans le Cloud), permettant notamment une mise à jour régulière de l'interface et en particulier de la base de données, et/ou de transmettre les instructions de fabrication d'un produit personnalisé à distance par exemple à un dispositif de fabrication de produit personnalisé.

De manière préférée selon l'invention, ladite base de données est stockée sur le cloud, ou dans un serveur, ou directement dans le dispositif.

De manière préférée selon l'invention, ledit dispositif comprend un dispositif de traitement desdites données comprenant un algorithme pour traiter lesdites données personnalisées afin de définir automatiquement des instructions de fabrication du produit personnalisé pour déterminer au moins un, de préférence tous les composant(s) que doit contenir le produit personnalisé et/ou calculer les quantités desdits composant(s) en fonction desdites données personnalisées.

Par dispositif de traitement des données on entend désigner selon la présente invention un système de traitement automatisé des données de préférence collectées par l'interface selon la présente invention. Ce dispositif de traitement des données peut comprendre en particulier une ou plusieurs unités de traitement, de la mémoire, un logiciel, une ou plusieurs bases de données selon l'invention. De préférence le logiciel permet d'appliquer l'algorithme de la méthode selon la présente invention.

Le dispositif de traitement des données peut comprendre de préférence un ordinateur. Par ordinateur on entend également tout dispositif électronique capable d'effectuer le traitement automatisé des données collectées par l'interface selon la présente invention.

De manière avantageuse selon l'invention, le dispositif de traitement des données peut être connectée à un réseau informatique, à un serveur, en particulier un serveur virtuel (dit serveur dans le Cloud) ou à Internet, permettant notamment une mise à jour régulière par exemple du logiciel, et/ou de transmettre les instructions de fabrication d'un produit personnalisé a distance.

De manière avantageuse selon l'invention, l'interface de collecte des données et le dispositif de traitement des données peuvent être comprise dans le même dispositif (par exemple une tablette tactile, un téléphone mobile ou un ordinateur, sous forme d'application ou non).

De manière avantageuse, le dispositif de fabrication d'un produit personnalisé selon la présente invention peut comprendre un même dispositif associant une interface et un dispositif de traitement des données (dit alors back-end), et/ou un deuxième dispositif de traitement des données sur un serveur dans le Cloud, le choix du dispositif de traitement des données avec lequel l'interface doit interagir parmi les deux dispositifs « back-end » ou « serveur dans le Cloud » se faisant en fonction du nombre de données à analyser, en particulier en fonction du nombre d'informations renseignées par l'utilisateur.

Avantageusement, le dispositif de traitement des données comprend un algorithme pour traiter les données entrées par l'utilisateur dans l'interface (tel que par exemple choix du composant de base), ou du choix du composant actif en fonction de la capsule (4) insérée dans le dispositif, par reconnaissance de ses codes d'identification (3), afin de définir automatiquement les composants adaptés pour la fabrication du produit personnalisé et calculer les quantités de chaque composant en fonction desdites données. Le dispositif comprend de préférence au moins un ordinateur.

De manière avantageuse, lesdites informations ou données peuvent être obtenues directement par l'utilisateur, par exemple par le biais d'un questionnaire, ou automatiquement en recueillant les informations d'un ou plusieurs objet connecté utilisé par ledit utilisateur, tel un téléphone mobile ou d'une montre connectée à internet, permettant par exemple de récupérer les données de l'activité physique effectuée par l'utilisateur dans la journée, ou encore la température, le taux d'hygrométrie, ou encore le taux de pollution du lieu où se trouve l'utilisateur suite à sa géolocalisation.

Avantageusement, l'interface comprend des boutons disposés sur le dispositif de fabrication, de préférence 3 boutons rétro éclairés, permettant de sélectionner le composant choisi. Dans le cadre d'un produit cosmétique, il peut par exemple s'agir de sélectionner le composant de base choisi, tel qu'une base sérum, une base émulsion huile dans eau, ou une émulsion eau dans huile.

De manière préférée selon l'invention, ledit dispositif selon l'invention comprend un dispositif de traitement des données tel que décrit dans les documents FR1203150, FR1600021, FR1600023, FR1600024, WO2017/118799, WO2017/118800, WO2017/118801, WO2017/118802, WO2017/118803, incorporés ici par référence.

De manière préférée selon l'invention, ledit dispositif comprend un dispositif de sélection et de dosage d'au moins un composant de base contenu dans un pot.

De manière préférée selon l'invention, ledit dispositif comprend un dispositif de sélection d'au moins un composant actif dans sa capsule (4).

De manière avantageuse, le dispositif de sélection
- est en rotation autour d'un axe,
- est de préférence circulaire ou hemi-circulaire,
- comprend au moins un, deux, trois, quatre, cinq, ou au moins six emplacement(s) pouvant accueillir chacun une capsule (4),
- comprend un trappe de sécurité avec un orifice permettant l'insertion de capsule (4) dans le dispositif de sélection quand l'orifice est en face d'un emplacement puis, après rotation, empêchant l'insertion de capsule (4) dans le dispositif de sélection quand l'orifice n'est pas en face d'un emplacement.

De manière préférée selon l'invention, ledit dispositif selon l'invention comprend un dispositif de sélection tel que décrit dans les documents FR1203150, FR1600021, FR1600023, FR1600024, WO2017/118799, WO2017/118800, WO2017/118801, WO2017/118802, WO2017/118803, incorporés ici par référence.

Selon un deuxième aspect, l'invention concerne l'utilisation du dispositif selon l'invention pour préparer un produit, de préférence cosmétique, personnalisé.

Par « produit cosmétique personnalisé » est entendu selon l'invention un produit cosmétique tel qu'une crème, un sérum, un gel, une huile, un masque, adapté à la volonté de soin de l'utilisateur du dispositif, ou à ses besoins, par exemple avec une action anti-âge, anti-tâche, ou hydratante de la peau.

Selon un troisième aspect, l'invention concerne une méthode de fabrication d'un produit, de préférence cosmétique, personnalisé pour un utilisateur à l'aide d'un dispositif selon l'invention, comprenant les étapes de :
a. Collecter les données personnalisées de l'utilisateur par une interface de collecte de données personnalisées ;
b. Traiter lesdites données personnalisées grâce à un algorithme permettant de définir automatiquement les composants, de préférence les composants actifs et/ou les composants de base, du produit personnalisé et calculer les quantités de chaque composant en fonction des données personnalisées collectées à l'étape a. ;
c. Afficher la formule personnalisée à l'utilisateur grâce à une interface et lui indiquer si il est nécessaire d'ajouter un ou plusieurs contenant(s) dans le dispositif, et le(s)quel(s) ;
d. Contrôler les contenants grâce aux codes d'identifications (3) qu'ils portent, et aux moyens de lecture dudit dispositif, afin de vérifier la nature du composant et/ou la date de péremption du composant et/ou la provenance du contenant et/ou la date d'ouverture du contenant et/ou la quantité restante du composant dans le contenant et/ou le nombre de dose restante du composant et/ou le numéro de lot et/ou le numéro de série et/ou les paramètres permettant au dispositif de se configurer ;
e. Empêcher le prélèvement du composant et indiquer le motif audit utilisateur via une interface apte à afficher des informations sur le contenant et le composant, si le contrôle réalisé à l'étape d. est négatif ;
f. Prélever la quantité désirée de chaque composant dans chaque contenant et les délivrer dans un dispositif de mélange, si le contrôle réalisé à l'étape d. est positif ;
g. Réécrire à l'aide d'un moyen d'écriture et ré-écriture sur le code d'identification (3) d'au moins un contenant la date d'ouverture du contenant et/ou la quantité restante du composant dans le contenant et/ou le nombre de dose restante du composant ;
h. Répéter si nécessaire l'étape d. et les étapes e. ou f. et g. pour chacun des contenants nécessaires, jusqu'à prélèvement de tous les composants, de préférence cosmétiques, nécessaires à la fabrication du produit personnalisé ;
i. Mélanger lesdits composants prélevés dans un dispositif de mélange ;
j. Fournir le produit, de préférence cosmétique, personnalisé à l'utilisateur ;
k. Optionnellement nettoyer le dispositif.

Par « contrôler » est entendu selon l'invention que les moyens de lecture selon l'invention vont lire les informations décrites des codes d'identification (3).

Par « contrôle réalisé qui est négatif » est entendu selon l'invention que la nature du composant n'est pas la bonne, et/ou que la date de péremption est dépassée, et/ou que la provenance du contenant n'est pas officielle, et/ou que la quantité restante du composant dans le contenant n'est pas suffisante, et/ou que le nombre de dose restante du composant n'est pas suffisant, et/ou que le numéro de lot et/ou le numéro de série n'est pas reconnu.

Par « contrôle réalisé qui est positif » est entendu selon l'invention que la nature du composant est bonne, et/ou que la date de péremption n'est pas dépassée, et/ou que la provenance du contenant est officielle, et/ou que la quantité restante du composant dans le contenant est suffisante, et/ou que le nombre de dose restante du composant est suffisant, et/ou que le numéro de lot et/ou le numéro de série est reconnu.

Par « prélever » est entendu selon l'invention l'extraction du contenant, de préférence d'un pot (2), de manière plus préférée par un embout pompe, et/ou d'une capsule (4), d'une manière plus préférée par un dispositif de prélèvement, par exemple composé d'une aiguille creuse et d'un moyen d'aspiration du composant, de préférence cosmétique, à travers ladite aiguille creuse.

Par « fournir le produit » est entendu selon l'invention rendre accessible le produit final à l'utilisateur.

Par « réécrire » est entendu selon l'invention que l'antenne RFID va mettre à jour les informations sur la puce RFID après prélèvement sur chacun des contenants utilisés pour fournir le produit personnalisé, de préférence cosmétique, selon l'invention.

### Figure :

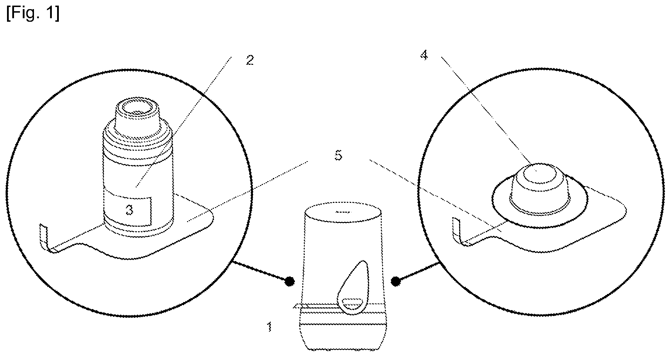

[Fig. 1] : La figure 1 décrit un dispositif pour la fabrication d'un produit personnalisé (1), un pot (2) comprenant au moins deux codes d'identification (3) dont une puce RFID, une capsule (4) et des antennes RFID (5) permettant la réécriture sur ladite puce RFID.

### Exemple :

En rapport avec les dessins, le dispositif selon l'invention collecte les données personnalisées de l'utilisateur grâce à son interface de collecte de données personnalisées, et les traite ensuite grâce à un algorithme. L'algorithme définie automatiquement les composants nécessaires à la fourniture d'un produit, de préférée cosmétique, personnalisé, ainsi que les quantités nécessaires. L'interface affiche ensuite la formule personnalisée à l'utilisateur grâce à l'interface et lui indique les capsules nécessaires à ajouter dans le dispositif. Les pots (2), comprenant classiquement les composants de bases, de préférence cosmétiques, sont disposés à l'intérieur du dispositif de sélection, et sont prélevés en fonction du produit personnalisé grâce à un embout pompe, et dirigés vers le dispositif de mélange. A la suite de la collecte et du traitement des données personnalisées de l'utilisateur, ce dernier apporte une capsule (4) au dispositif, comprenant un composant, de préférence un actif cosmétique. Les codes d'identifications (3) présents sur les contenants sont ensuite lus par les moyens de lecture du dispositif selon l'invention, qui permettent contrôler les informations sur le contenant et le composant. Si le contrôle réalisé est négatif, le dispositif pour la fabrication d'un produit personnalisé (1) selon l'invention l'indique à l'utilisateur, et empêche le prélèvement du composant, invitant l'utilisateur grâce à l'interface à changer de capsule (4). Si le contrôle réalisé est positif, le dispositif pour la fabrication d'un produit personnalisé (1) prélève grâce à une aiguille creuse et un moyen d'aspiration la quantité de contenant nécessaire à la production du produit personnalisé, et l'oriente grâce au dispositif de transfert des composants vers le dispositif de mélange. Cette étape est effectuée autant de fois qu'il y a de composants à ajouter pour obtenir la composition, de préférence cosmétique, personnalisée. Une fois tous les composants dans le dispositif de mélange, et le produit homogène, le dispositif délivre le produit personnalisé, de préférence cosmétique, à l'utilisateur.

## Revendications

1. Dispositif pour la fabrication d'un produit cosmétique personnalisé (1), par mélange d'au moins deux composants logés dans un contenant respectif, au moins un des contenants étant un pot (2), lesdits contenants étant munis chacun d'au moins un code d'identification (3), ledit dispositif pour la fabrication d'un produit personnalisé (1) comprenant au moins un moyen de lecture dudit code d'identification (3) du pot, et comprenant un dispositif de mélange, **caractérisé en ce que** au moins un autre contenant est une capsule (4), le code d'identification (3) de la capsule et du pot étant de nature identique ou différente, ledit dispositif comprenant au moins un moyen de lecture dudit code d'identification (3) de la capsule, et lesdits moyens de lecture pouvant être un seul moyen de lecture dans le cas où le code d'identification (3) de la capsule et du pot sont de nature identique, ledit dispositif comprenant au moins un moyen d'écriture et ré-écriture de codes d'identification (3) de la capsule et/ou du pot, lesdits codes d'identification (3) stockant des informations sur le contenant et le composant, lesdites informations comprenant la date d'ouverture du contenant et la péremption du composant suite à cette ouverture.

2. Dispositif selon la revendication précédente, **caractérisé en ce que** lesdits codes d'identifications (3) sont choisis parmi des codes couleurs, des puces RFID, des codes barre, des QR code, des codes Datamatrix, les codes PDF-417, des MaxiCode, des étiquettes NFC, des formes mécaniques.

3. Dispositif selon les revendications précédentes, **caractérisé en ce que** le moyen de lecture du code d'identification (3) de la capsule et/ou du pot, et le moyen d'écriture et ré-écriture du code d'identification (3) de la capsule et/ou du pot sont un même dispositif.

4. Dispositif selon les revendications précédentes, **caractérisé en ce que** au moins un desdits codes d'identification (3) de la capsule et/ou du pot consiste en une puce RFID, et le moyen de lecture, d'écriture et ré-écriture de ladite puce RFID est une antenne RFID (5).

5. Dispositif selon les revendications précédentes, **caractérisé en ce que** le code d'identification (3) de la capsule est un QR code, le code d'identification (3) du pot est une puce RFID, et le moyen de lecture, d'écriture et ré-écriture de ladite puce RFID est une antenne RFID (5).

6. Dispositif selon les revendications précédentes, **caractérisé en ce que** lesdits codes d'identification (3) stockent en outre des informations sur la nature du composant et/ou et/ou la provenance du contenant et/ou la quantité restante du composant dans le contenant et/ou le nombre de dose restante du composant et/ou le numéro de lot et/ou le numéro de série et/ou des paramètres permettant au dispositif de se configurer.

7. Dispositif selon la revendication précédente, **caractérisée en ce que** lesdits codes d'identification (3) stockent des paramètres permettant au dispositif de se configurer.

8. Dispositif selon les revendications précédentes, **caractérisé en ce que** ledit dispositif comprend une interface apte à afficher les informations sur le contenant et le composant, stockées dans les codes d'identification (3), lesdites informations comprenant la nature du composant et/ou la date de péremption du composant et/ou la provenance du contenant et/ou la date d'ouverture du contenant et/ou la quantité restante du composant dans le contenant et/ou le nombre de dose restante du composant et/ou le numéro de lot et/ou le numéro de série et/ou les paramètres permettant au dispositif de se configurer.

9. Dispositif selon les revendications précédentes, **caractérisé en ce que** ledit dispositif comprend une interface de collecte des données personnalisées apte à interagir avec l'utilisateur pour permettre à l'utilisateur d'indiquer ses données personnalisées, de préférence choisies à partir d'une base de données prédéfinie.

10. Dispositif selon la revendication précédente, **caractérisé en ce que** ledit dispositif comprend un dispositif de traitement desdites données personnalisées comprenant un algorithme pour traiter lesdites données personnalisées, afin de définir automatiquement des instructions de fabrication du produit personnalisé pour déterminer au moins un, de préférence tous les composant(s) que doit contenir le produit personnalisé et/ou calculer les quantités desdits composant(s) en fonction desdites données personnalisées.

11. Méthode de fabrication d'un produit cosmétique, personnalisé pour un utilisateur à l'aide d'un dispositif selon les revendications 1 à 10, comprenant les étapes de :
a. Collecter les données personnalisées de l'utilisateur par une interface de collecte de données personnalisées ;
b. Traiter lesdites données personnalisées grâce à un algorithme permettant de définir automatiquement les composants, du produit personnalisé et calculer les quantités de chaque composant en fonction des données personnalisées collectées à l'étape a. ;
c. Afficher la formule personnalisée à l'utilisateur grâce à une interface et lui indiquer si il est nécessaire d'ajouter un ou plusieurs contenant(s) dans le dispositif, et le(s)quel(s) ;
d. Contrôler les contenants grâce aux codes d'identifications (3) qu'ils portent, et aux moyens de lecture dudit dispositif, afin de vérifier la nature du composant et/ou la date de péremption du composant et/ou la provenance du contenant et/ou la date d'ouverture du contenant et/ou la quantité restante du composant dans le contenant et/ou le nombre de dose restante du composant et/ou le numéro de lot et/ou le numéro de série et/ou les paramètres permettant au dispositif de se configurer ;
e. Empêcher le prélèvement du composant et indiquer le motif audit utilisateur via une interface apte à afficher des informations sur le contenant et le composant, si le contrôle réalisé à l'étape d. est négatif ;
f. Prélever la quantité désirée de chaque composant dans chaque contenant et les délivrer dans ledit dispositif de mélange, si le contrôle réalisé à l'étape d. est positif ;
g. Réécrire à l'aide d'un moyen d'écriture et ré-écriture sur le code d'identification (3) d'au moins un contenant la date d'ouverture du contenant et/ou la quantité restante du composant dans le contenant et/ou le nombre de dose restante du composant ;
h. Répéter si nécessaire l'étape d. et les étapes e. ou f. et g. pour chacun des contenants nécessaires, jusqu'à prélèvement de tous les composants cosmétiques, nécessaires à la fabrication du produit personnalisé ;
i. Mélanger lesdits composants prélevés dans ledit dispositif de mélange ;
j. Fournir le produit, de préférence cosmétique, personnalisé à l'utilisateur.

## Patentansprüche

1. Vorrichtung zum Herstellen eines personalisierten Kosmetikprodukts (1) durch Mischen von mindestens zwei Komponenten, die jeweils in einem Behälter untergebracht sind, wobei mindestens einer der Behälter ein Topf (2) ist, wobei die Behälter jeweils mit mindestens einem Identifikationscode (3) versehen sind, die Vorrichtung zum Herstellen eines personalisierten Produkts (1) umfassend mindestens ein Mittel zum Lesen des Identifikationscodes (3) des Topfs und umfassend eine Mischvorrichtung, **dadurch gekennzeichnet, dass** mindestens ein weiterer Behälter eine Kapsel (4) ist, wobei der Identifikationscode (3) der Kapsel und des Topfs von identischer oder unterschiedlicher Art sind, die Vorrichtung umfassend mindestens ein Mittel zum Lesen des Identifikationscodes (3) der Kapsel, wobei die Mittel zum Lesen ein einziges Mittel zum Lesen sein können, in dem Fall, in dem der Identifikationscode (3) der Kapsel und des Topfs von identischer Art sind, die Vorrichtung umfassend mindestens ein Mittel zum Schreiben und erneuten Schreiben von Identifikationscodes (3) der Kapsel und/oder des Topfs, wobei die Identifikationscodes (3) Informationen über den Behälter und die Komponente speichern, die Informationen umfassend das Öffnungsdatum des Behälters und das Verfallsdatum der Komponente nach dieser Öffnung.

2. Vorrichtung nach dem vorstehenden Anspruch,
**dadurch gekennzeichnet, dass** die Identifizierungscodes (3) aus Farbcodes, RFID-Chips, Strichcodes, QR-Codes, Datamatrix-Codes, PDF-417-Codes, MaxiCode, NFC-Etiketten, mechanischen Formen ausgewählt werden.

3. Vorrichtung nach den vorstehenden Ansprüchen,
**dadurch gekennzeichnet, dass** die Mittel zum Lesen des Identifikationscodes (3) der Kapsel und/oder des Topfs und die Mittel zum Schreiben und erneuten Schreiben des Identifikationscodes (3) der Kapsel und/oder des Topfs dieselbe Vorrichtung sind.

4. Vorrichtung nach den vorstehenden Ansprüchen,
**dadurch gekennzeichnet, dass** mindestens einer der Identifizierungscodes (3) der Kapsel und/oder des Topfs aus einem RFID-Chip besteht und das Mittel zum Lesen, Schreiben und erneuten Schreiben des RFID-Chips eine RFID-Antenne (5) ist.

5. Vorrichtung nach den vorstehenden Ansprüchen,
**dadurch gekennzeichnet, dass** der Identifikationscode (3) der Kapsel ein QR-Code ist, der Identifikationscode (3) des Topfs ein RFID-Chip ist und das Mittel zum Lesen, Schreiben und erneuten Schreiben des RFID-Chips eine RFID-Antenne (5) ist.

6. Vorrichtung nach den vorstehenden Ansprüchen,
**dadurch gekennzeichnet, dass** die Identifikationscodes (3) ferner Informationen über die Art der Komponente und/oder die Herkunft des Behälters und/oder die verbleibende Menge der Komponente in dem Behälter und/oder die Anzahl der verbleibenden Dosen der Komponente und/oder die Chargennummer und/oder die Seriennummer und/oder Parameter speichern, die es der Vorrichtung ermöglichen, sich zu konfigurieren.

7. Vorrichtung nach dem vorstehenden Anspruch,
**dadurch gekennzeichnet, dass** die Identifikationscodes (3) Parameter speichern, die es der Vorrichtung ermöglichen, sich zu konfigurieren.

8. Vorrichtung nach den vorstehenden Ansprüchen,
**dadurch gekennzeichnet, dass** die Vorrichtung eine Schnittstelle umfasst, die geeignet ist, Informationen über den Behälter und die Komponente, die in den in den Identifikationscodes (3) gespeichert sind, anzuzeigen, die Informationen umfassend die Art der Komponente und/oder das Verfallsdatum der Komponente und/oder die Herkunft des Behälters und/oder das Öffnungsdatum des Behälters, und/oder die verbleibende Menge der Komponente in dem Behälter und/oder die Anzahl der verbleibenden Dosen der Komponente und/oder die Chargennummer und/oder die Seriennummer und/oder die Parameter, die es der Vorrichtung ermöglichen, sich zu konfigurieren.

9. Vorrichtung nach den vorstehenden Ansprüchen,
**dadurch gekennzeichnet, dass** die Vorrichtung eine personalisierte Datenerfassungsschnittstelle, die geeignet ist, um mit dem Benutzer zu interagieren, um es dem Benutzer zu ermöglichen, seine personalisierten Daten anzugeben, die vorzugsweise aus einer vordefinierten Datenbank ausgewählt werden, umfasst.

10. Vorrichtung nach dem vorstehenden Anspruch,
**dadurch gekennzeichnet, dass** die Vorrichtung eine Vorrichtung zum Verarbeiten der personalisierten Daten umfasst, umfassend einen Algorithmus zum Verarbeiten der personalisierten Daten, um automatisch Anweisungen für die Herstellung des personalisierten Produkts zu definieren, zum Bestimmen mindestens einer, vorzugsweise aller Komponenten, die das personalisierte Produkt enthalten muss, und/oder Berechnen der Mengen dieser Komponente(n) in Abhängigkeit von den personalisierten Daten.

11. Verfahren zum Herstellen eines personalisierten Kosmetikprodukts für einen Benutzer mithilfe einer Vorrichtung nach den Ansprüchen 1 bis 10, umfassend die Schritte:
a. Sammeln der personalisierten Daten des Benutzers durch eine Schnittstelle zum Sammeln von personalisierten Daten;
b. Verarbeiten der personalisierten Daten mittels eines Algorithmus, der es ermöglicht, die Komponenten des personalisierten Produkts automatisch zu definieren und die Mengen von jeder Komponente in Abhängigkeit der personalisierten Daten, die in Schritt a. gesammelt werden, zu berechnen;
c. Anzeigen der personalisierten Formel an den Benutzer, mittels einer Schnittstelle, und diesem angeben, ob es erforderlich ist, einen oder mehrere Behälter, und welche, in die Vorrichtung hinzuzufügen;
d. Kontrollieren der Behälter mittels der Identifikationscodes (3), die diese tragen, und der Mittel zum Lesen der Vorrichtung, um die Art der Komponente und/oder das Verfallsdatum der Komponente und/oder die Herkunft des Behälters und/oder das Öffnungsdatum des Behälters und/oder die verbleibende Menge der Komponente in dem Behälter und/oder die Anzahl der verbleibenden Dosen der Komponente und/oder die Chargennummer und/oder die Seriennummer und/oder die Parameter zu verifizieren, die es der Vorrichtung ermöglichen, sich zu konfigurieren;
e. Verhindern der Entnahme der Komponente und Angeben des Grunds an den Benutzer über eine Schnittstelle, die geeignet ist, Informationen über den Behälter und die Komponente anzuzeigen, falls die in Schritt d. ausgeführte Kontrolle negativ ist;
f. Entnehmen der gewünschte Menge von jeder Komponente in jedem Behälter und Hinzugeben dieser in die Mischvorrichtung, falls die in Schritt d. ausgeführte Kontrolle positiv ist;
g. erneutes Schreiben, mithilfe eines Mittels zum Schreiben und erneuten Schreiben auf den Identifikationscode (3) von mindestens einem Behälter, des Öffnungsdatums des Behälters und/oder der verbleibenden Menge der Komponente in dem Behälter und/oder der Anzahl der verbleibenden Dosen der Komponente;
h. Wiederholen, falls erforderlich, des Schritts d. und der Schritte e. oder f. und g. für jeden der erforderlichen Behälter, bis alle kosmetischen Komponenten, die für die Herstellung des personalisierten Produkts erforderlich sind, entnommen sind;
i. Mischen der entnommenen Komponenten in der Mischvorrichtung;
j. Bereitstellen des vorzugsweise kosmetischen Produkts, das für den Benutzer personalisiert ist.

## Claims

1. Device for producing a personalized cosmetic product (1), by mixing at least two components housed in a respective container, at least one of the containers being a jar (2), said containers each being provided with at least one identification code (3), said device for producing a personalized product (1) comprising at least one means for reading said identification code (3) of the jar, and comprising a mixing device, **characterized in that** at least one other container is a capsule (4), the identification code (3) of the capsule and of the jar being identical or different in nature, said device comprising at least one means for reading said identification code (3) of the capsule, and said reading means can be a single reading means in the event that the identification code (3) of the capsule and of the jar are identical in nature, said device comprising at least one means for writing and rewriting identification codes (3) of the capsule and/or of the jar, said identification codes (3) storing information about the container and the component, said information including the opening date of the container and the expiry of the component following this opening.

2. Device according to the preceding claim, **characterized in that** said identification codes (3) are selected from color codes, RFID chips, bar codes, QR codes, Datamatrix codes, PDF-417 codes, MaxiCodes, NFC tags and mechanical shapes.

3. Device according to the preceding claims, **characterized in that** the means for reading the identification code (3) of the capsule and/or of the jar, and the means for writing and rewriting the identification code (3) of the capsule and/or of the jar are the same device.

4. Device according to the preceding claims, **characterized in that** at least one of said identification codes (3) of the capsule and/or of the jar is an RFID chip, and the means for reading, writing, and rewriting said RFID chip is an RFID antenna (5).

5. Device according to the preceding claims, **characterized in that** the identification code (3) of the capsule is a QR code, the identification code (3) of the jar is an RFID chip, and the means for reading, writing, and rewriting said RFID chip is an RFID antenna (5).

6. Device according to the preceding claims, **characterized in that** said identification codes (3) further store information about the nature of the component and/or the origin of the container and/or the remaining quantity of the component in the container and/or the number of remaining doses of the component and/or the batch number and/or the serial number and/or parameters enabling the device to be set up.

7. Device according to the preceding claim, **characterized in that** said identification codes (3) store parameters enabling the device to be set up.

8. Device according to the preceding claims, **characterized in that** said device comprises an interface capable of displaying the information about the container and the component that is stored in the identification codes (3), said information including the nature of the component and/or the expiration date of the component and/or the origin of the container and/or the opening date of the container and/or the remaining quantity of the component in the container and/or the number of remaining doses of the component and/or the batch number and/or the serial number and/or the parameters enabling the device to be set up.

9. Device according to the preceding claims, **characterized in that** said device comprises a personalized data collection interface capable of interacting with the user in order to enable the user to indicate their personalized data, preferably selected from a predefined database.

10. Device according to the preceding claim, **characterized in that** said device comprises a device for processing said personalized data comprising an algorithm for processing said personalized data, in order to automatically define instructions for producing the personalized product in order to determine at least one, preferably all, component(s) that must be contained in the personalized product and/or to calculate the quantities of said component(s) based on said personalized data.

11. Method for producing a cosmetic product which is personalized for a user by means of a device according to claims 1 to 10, the method comprising the steps of:
a. Collecting the user's personalized data via a personalized data collection interface;
b. Processing the personalized data using an algorithm making it possible to automatically define the components of the personalized product and to calculate the quantities of each component based on the personalized data collected in step a.;
c. Displaying the personalized formula to the user via an interface, and indicating to the user if one or more containers need to be added to the device, and which one(s);
d. Checking the containers by means of the identification codes (3) that they bear, and by means of the reading means of said device, in order to verify the nature of the component and/or the expiration date of the component and/or the origin of the container and/or the opening date of the container and/or the remaining quantity of the component in the container and/or the number of remaining doses of the component and/or the batch number and/or the serial number and/or the parameters enabling the device to be set up;
e. Preventing the extraction of the component and indicating the reason to said user via an interface capable of displaying information about the container and the component, if the check carried out in step d. is negative;
f. Extracting the desired quantity of each component in each container and delivering them into said mixing device, if the check carried out in step d. is positive;
g. Rewriting, using a means for writing and rewriting on the identification code (3) of at least one container, the opening date of the container and/or the remaining quantity of the component in the container and/or the number of remaining doses of the component;
h. Repeating step d. and steps e. or f. and g., if necessary, for each container required, until all the cosmetic components needed to produce the personalized product have been extracted;
i. Mixing the extracted components in the mixing device;
j. Providing the user with the personalized, preferably cosmetic, product.
